(19) **Europäisches Patentamt / European Patent Office / Office européen des brevets**

(11) **EP 4 679 760 A1**

(12) # EUROPEAN PATENT APPLICATION

(43) Date of publication:
**14.01.2026 Bulletin 2026/03**

(21) Application number: **24188169.7**

(22) Date of filing: **12.07.2024**

(51) International Patent Classification (IPC):
*H04L 9/00* $^{(2022.01)}$     *H04L 9/30* $^{(2006.01)}$

(52) Cooperative Patent Classification (CPC):
**H04L 9/003; H04L 9/004; H04L 9/3093;**
H04L 2209/08

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Nagravision Sàrl**
**1033 Cheseaux-sur-Lausanne (CH)**

(72) Inventors:
• **TAHA, Mounir**
  **1033 Cheseaux-sur-Lausanne (CH)**
• **GENET, Aymeric**
  **1033 Cheseaux-sur-Lausanne (CH)**
• **VILLEGAS, Karine**
  **1033 Cheseaux-sur-Lausanne (CH)**

(74) Representative: **Novagraaf International SA**
**Chemin de l'Echo 3**
**1213 Onex, Geneva (CH)**

(54) **METHOD FOR EXECUTING POST-QUANTUM CRYPTOGRAPHIC OPERATIONS REQUIRING POLYNOMIAL OPERATIONS**

(57)     The method is executed by a computing device (300). It includes a cryptographic operation including at least one polynomial operation (130; 230) on at least one polynomial (A, B) with coefficients in an integer ring ($\mathbb{Z}_q$) that represents the integers modulo q, q being an integer, said method comprising :
A) transforming (120; 220) the polynomial coefficients from said integer ring $\mathbb{Z}_{pqt}$ ($\mathbb{Z}_q$) into a larger integer ring (), at least by lifting (123) the coefficients with a lifting integer ($r_p$; $r_{A\_p}$, $r_{B\_p}$) from another integer ring ($\mathbb{Z}_p$) that represents the integers modulo p, p being an integer, so that the transformed coefficients modulo p are equal to said lifting integer ($r_p$; $r_{A\_p}$, $r_{B\_p}$),
B) performing (130; 230) the at least one polynomial operation with the transformed coefficients to obtain an intermediate result that is verifiable based on said lifting integer ($r_p$; $r_{A\_p}$, $r_{B\_p}$), and
C) reducing coefficients of said intermediate result modulo q to provide a result of the cryptographic operation.

EP 4 679 760 A1

**Fig. 1**

100

110 — Polynomial A in $\mathbb{Z}_q[x]/(f)$ with $f = x^n + 1$ or $f = x^n - 1$

120 — Transforming coefficients $A_{q\_i}$ in $\mathbb{Z}_q$ into $A_{pqt\_i}$ in $\mathbb{Z}_{pqt}$

randomized and lifted polynomial A'

130 — Polynomial operation on transformed polynomial A'

Intermediate Result (IR)

140 — Pre-computing Reference Result (RR) in $\mathbb{Z}_p$

150 — Reducing IR to $\mathbb{Z}_p$

Verification Result (VR)

160 — VR= RR?

Yes          No

170 — Reducing IR to $\mathbb{Z}_q$

190 — Positive detection of fault attack

180 — Outputting Result of cryptographic operation

**Description**

TECHNICAL FIELD

The present disclosure relates a method and computing device for executing cryptographic operations, in particular a post-quantum cryptographic operations, comprising at least one polynomial operation on one or more polynomials.

BACKGROUND

Cryptographic algorithms play a crucial role in ensuring the privacy of communications through encryption, authentication, and generating verifiable signatures. Emerging quantum computing poses a significant threat to the security of classical cryptographic schemes such as RSA and ECC-based cryptography. As quantum computers gain sufficient computational power, these classical cryptographic schemes will become vulnerable to quantum attacks. Consequently, there is a need to develop new, efficient cryptographic algorithms that can withstand such quantum threats.

Lattice-based cryptographic algorithms, including ML-KEM (Modular Lattice Key Encapsulation Mechanism) and ML-DSA (Modular Lattice Digital Signature Algorithm), have emerged as promising candidates for post-quantum cryptography. ML-KEM is a cryptographic algorithm for securely transmitting encryption keys, while ML-DSA is a cryptographic algorithm for creating digital signatures, ensuring data integrity and authenticity. These algorithms are much more complex than previous public cryptography algorithms such as RSA or ECC-based cryptographic algorithms. This complexity results in longer execution times, higher memory usage, and more intermediate variables. The increased complexity also means more potential points of leakage and more variables susceptible to be considered as target for hackers, making these algorithms more prone to side-channel and fault attacks. This makes securing them more complex and costly.

A common countermeasure against side-channel attacks involves masking the intermediate values of a sensitive process with random masks. This approach ensures that an attacker, even if it is able to monitor the process at a specific point, would only obtain random values, thereby preventing any leakage of a secret key used in the sensitive process.

Lattice-based cryptography relies on polynomial operations, including both polynomial multiplications and additions. To protect these cryptographic operations from side-channel attacks, it is essential to protect the polynomial coefficients by masking them during polynomial additions and/or multiplications.

Furthermore, to deploy cryptographic algorithms on IoT devices, it is crucial to protect these devices against most fault attacks and/or side-channel attacks. As the IoT devices have limited resources, it is important to ensure that this protection is cost-effective in terms of storage and computational power.

Therefore, there is a need for providing countermeasures against implementation attacks (e.g., fault attacks, side-channel attacks) that exploit vulnerabilities in the physical implementation of a cryptographic system, rather than weaknesses in the cryptographic algorithms. Such implementation attacks target how the system operates in practice, leveraging various physical phenomena or induced errors to extract secret information. In particular, there is a need to provide such countermeasures for protection of cryptographic algorithms such as lattice-based cryptography relying heavily on polynomial operations. The countermeasures must be efficient and require minimal storage and computation power, making it suitable for deployment in resource-constrained devices like IoT devices.

SUMMARY

The present disclosure concerns a method for executing, in a computing device, a cryptographic operation including at least one polynomial operation on at least one polynomial with coefficients in, or belonging to, an integer ring that represents the integers modulo q, q being an integer, said method comprising:

A) transforming the polynomial coefficients from said integer ring to obtain transformed coefficients belonging to a larger integer ring, at least by lifting the polynomial coefficients with a lifting integer from another integer ring that represents the integers modulo p, p being an integer, so that the transformed coefficients modulo p are equal to said lifting integer;

B) performing the at least one polynomial operation with the transformed coefficients to obtain an intermediate result that is verifiable based on said lifting integer; and

C) reducing coefficients of said intermediate result modulo q to provide a result of the cryptographic operation.

The present method provides a robust solution to the vulnerabilities posed by emerging cryptographic algorithms such as lattice-based cryptographic algorithms relying heavily on polynomial operations to quantum computing attacks, specifically implementation attacks (e.g., fault attacks and/or side-channel attacks).

The use of a larger integer ring for performing polynomial operations introduces additional complexity for potential attackers.

The operation of lifting of the polynomial coefficient based on a lifting integer from the ring of integers modulo p ensures that the transformed coefficients subsequently reduced modulo p are equal to the lifting integer. Thanks to that, the intermediate result obtained by performing the polynomial operation on the transformed polynomial (i.e., the polynomial with the transformed coefficients) is easily verifiable based on this lifting integer, simply after applying a modulo p to the intermediate result.

This intermediate result is typically a polynomial with coefficients. The polynomial coefficients of the intermediate result polynomial can be reduced by applying a modulo q. The resulting polynomial (i.e., after applying modulo q) can be used to execute the cryptographic operation and provide a result of the cryptographic operation.

In an embodiment, the step A) further includes a step of randomizing said polynomial coefficients with a randomization integer randomly selected from another integer ring that represents the integers modulo t, t being an integer.

Advantageously, the step of randomizing the polynomial coefficients is performed prior to lifting the polynomial coefficients. This also to mask the polynomial coefficients before lifting them, which introduces additional complexity for potential attackers.

The randomization integer is selected from the integer ring $\mathbb{Z}_t$ that represents the integers modulo t, and the lifting integer is selected from the integer ring $\mathbb{Z}_p$ that represents the integers modulo p. The dual-layer randomization and lifting mechanism ensures that the coefficients are masked and, once lifted and subsequently reduced modulo p, are equal to the lifting integer. This ensures that:

- the transformation process effectively hides the true values of the coefficients, making it difficult for attackers to extract sensitive information through side-channel attacks, and
- the intermediate result resulting from the polynomial operation on the transformed polynomial(s) is easily verifiable based on the lifting integer for fault attack detection.

Furthermore, the method's efficiency and minimal storage and computation power requirements make it suitable for deployment in resource-constrained devices like IoT devices, ensuring that these devices can securely perform cryptographic operations without being vulnerable to side-channel and fault attacks.

In an embodiment, the integers p, q and t are pairwise coprime.

In an embodiment, the integer t is odd.

Optionally, the lifting integer is randomly selected.

In an embodiment, the integer p is a prime number different from q such that a $n^{th}$ primitive root of unity exists in the integer ring of integers modulo p.

In an embodiment, the method further comprises a verification process, including:

- reducing modulo p the coefficients of the intermediate result to obtain a verification result;
- verifying if the verification result matches a reference result based on the lifting integer and, in a negative event, detecting a fault.

The reference result can be pre-computed by performing said at least one polynomial operation (i.e., the same polynomial operation(s) as the one(s) performed in step B)) but with polynomial coefficients of the polynomial all equal to the lifting integer.

Advantageously, the step C) is performed only if the verification result matches the reference result.

The intermediate result obtained by performing the polynomial operations with the transformed polynomial (i.e., the polynomial with transformed coefficients) can be easily verified by using the lifting integer. It allows for the easy detection of faults or errors introduced during the polynomial operation. By reducing the intermediate result modulo p to obtain a verification result and comparing this verification result to a pre-computed reference result based on the lifting integer, the method can easily detect any discrepancies that may indicate a fault attack. This ensures the integrity of the cryptographic operation and prevents the final result from being compromised by undetected faults.

The present method can unmask the intermediate result by reducing the coefficients modulo q to provide a result of the cryptographic operation. This unmasking step may be performed only if no fault is detected, further enhancing the security of the cryptographic operation.

In an embodiment, the cryptographic operation including a polynomial multiplication between two polynomials, the verification process comprises pre-computing coefficients of the reference result by computing a constant that is the product of the lifting integer used to lift the coefficients of one of the two polynomial and the lifting integer used to lift the coefficients of the other one of the two polynomials and computing each coefficient of the reference result based on said constant.

For example, each coefficient of the reference result can be computed based on the formula

$$m_i = (2(i + 1) - n) \times s,$$

where

- $i$ represents a coefficient index,
- $n$ represents the degree of a reduction polynomial, and
- $s$ represents the computed constant.

For example, the step of randomizing the coefficients is carried out based on the expression $c_{qt} = c_q + q \times r_t$, where

- $c_q$ represents a coefficient in $\mathbb{Z}_q$ ;

- $c_{qt}$ represents the randomized coefficient in $\mathbb{Z}_{qt}$ ;

- $r_t$ represents the first random integer from $\mathbb{Z}_t$ .

In an embodiment, the step of lifting the randomized coefficients is carried out by computing the lifted coefficients based on the expression $c_{pqt} =$

$$q \times (q^{-1} \bmod p) \times r_p + p \times (p^{-1} \bmod q) \times c_{qt},$$

where

- $c_{pqt}$ represents the lifted coefficient in $\mathbb{Z}_{pqt}$ ;

- $c_{qt}$ represents the randomized coefficient in $\mathbb{Z}_{qt}$ ;

- $r_p$ represents the lifting integer from $\mathbb{Z}_p$ .

Advantageously, the step of randomizing the coefficients may be repeated after changing the integer t or after randomly selecting a new randomization integer from the integer ring $\mathbb{Z}_t$ .

In an embodiment, the cryptographic operation including a polynomial multiplication and application of Number Theoretic Transform, or NTT, to polynomials, the method comprises a step of computing an $n^{th}$ primitive root of unity from an $n^{th}$ primitive root of unity in the integer ring $(\mathbb{Z}_p)$ of integers modulo p and an $n^{th}$ primitive root of unity in the integer ring $(\mathbb{Z}_q)$ of integers module q.

In an embodiment, said $n^{th}$ primitive root of unity can be computed based on the expression $\omega = q \times (q^{-1} \bmod p) \times \omega_p + p \times (p^{-1} \bmod q) \times \omega_q$, where

- $\omega_p$ is the $n^{th}$ primitive root of unity in the integer ring $\mathbb{Z}_p$ ;

- $\omega_q$ is the $n^{th}$ primitive root of unity in the integer ring $\mathbb{Z}_q$ ;
- $\omega$ is the computed $n^{th}$ primitive root of unity.

In an embodiment, the at least one polynomial is from a quotient ring $\mathbb{Z}_q[x]/(f)$, wherein

- $\mathbb{Z}_q[x]$ represents a ring of polynomials with coefficients in the integer ring $\mathbb{Z}_q$ that represent the integers modulo q,
- f represents a reduction polynomial, and
- any polynomial of said quotient ring $\mathbb{Z}_q[x]/(f)$ is considered modulo said reduction polynomial f.

For example, the reduction polynomial is of the form $x^n + 1$ or $x^n - 1$.

The present disclosure also concerns:

- a computing device configured to perform the steps of the method previously defined;
- a computer program comprising instructions which, when the program is executed by a computer, cause the computer to carry out the steps of the method previously defined; and
- a computer-readable medium comprising instructions which, when executed by a computer, cause the computer to carry out the steps of the method previously defined.

## BRIEF DESCRIPTION OF THE DRAWINGS

Other features, purposes and advantages of the disclosure will become more explicit by means of reading the detailed statement of the non-restrictive embodiments made with reference to the accompanying drawings.

FIG. 1 illustrates a flow chart diagram of a method for executing a cryptographic operation including at least on polynomial operation on a polynomial with fault attack detection and side-channel protection, according to an embodiment.

FIG. 2 illustrates a flowchart diagram of a process for transforming polynomial coefficients for the at least one polynomial operation, according to an embodiment.

FIG. 3 illustrates a flow chart diagram of a method for executing a cryptographic operation including a polynomial multiplication between two polynomials with fault attack detection and side-channel protection, according to a second embodiment.

FIG. 4 illustrates a flow chart diagram of a process for computing the polynomial multiplication with application of Number Theoretic Transform (NTT), according to the second embodiment.

FIG. 5 illustrates a flow chart diagram for computing a reference result of the polynomial multiplication, according to the second embodiment.

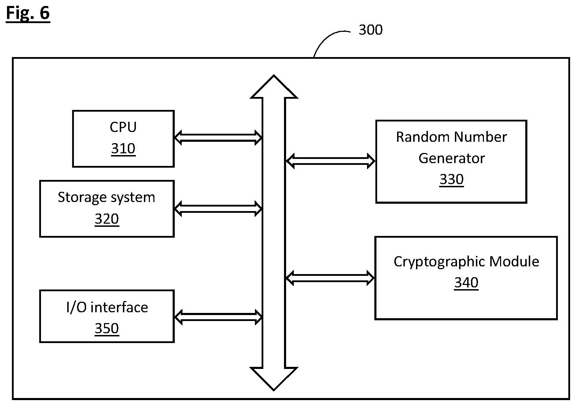

FIG. 6 illustrates a block diagram of a computing device configured to perform cryptographic operations, according to an embodiment.

## DETAILED DESCRIPTION

The following detailed description describes various features and functions of the disclosed systems and methods with reference to the accompanying figures. In the figures, similar symbols identify similar components, unless context dictates otherwise. The illustrative system, device and method embodiments described herein are not meant to be limiting. It may be readily understood by those skilled in the art that certain aspects of the disclosed systems, devices and methods can be arranged and combined in a wide variety of different configurations, all of which are contemplated herein.

Quantum computing represent a significant threat to the security of classical cryptographic systems. The ability of quantum computers to solve complex mathematical problems, which form the basis of current cryptographic algorithms, could render widely used encryption methods such as RSA and ECC-based cryptography ineffective. This vulnerability necessitates the development of cryptographic algorithms that can withstand the computational capabilities of quantum computers, ensuring the continued protection of sensitive information.

Some emerging quantum-resistant cryptographic algorithms, including those based on lattice structures, are found to be susceptible to implementation attacks such as side-channel attacks and/or fault attacks. These implementation attacks exploit the physical implementation of a cryptographic algorithm, rather than theoretical weaknesses in the algorithms themselves. Fault attacks induce errors in a device's operations to reveal internal states or secret information. Side-channel attacks can extract secret information from a device by analyzing information such as timing, power consumption, or electromagnetic emissions. The complexity of lattice-based cryptographic algorithms, which require numerous and various intermediate operations, makes them particularly vulnerable to such implementation attacks. As a result, there is a need for efficient and effective countermeasures that can be implemented on computing devices. Furthermore, such countermeasures should be adapted to computing devices with limited resources, such as IoT devices.

The present disclosure introduces a method and computing device for executing a cryptographic operation or algorithm that includes one or more polynomial operations, which may be part of lattice-based cryptography.

The polynomial operation is part of the cryptographic operation or cryptographic algorithm. This cryptographic operation may include encryption, decryption, signature generation, signature verification. It may involve one or more polynomial operations (e.g., multiplication, addition, NTT, inverse NTT, etc.).

The disclosed method first provides protection against fault attack. This approach involves transforming the coefficients of at least one polynomial from (i.e., belonging to) a smaller integer ring into transformed coefficients belonging to a larger integer ring, where the coefficients are lifted using a lifting integer. The lifting integer may be randomly selected in a specific integer ring that represents the integers modulo this specific integer. Furthermore, this lifting operation of the coefficients has the property that the transformed coefficients once lifted and subsequently reduced modulo said specific integer are equal to the lifting integer.

In a particular embodiment, the disclosed method provides simultaneous protection against both fault and side-channel attacks using a single countermeasure. This approach involves transforming the polynomial coefficients of at least one polynomial belonging to a smaller integer ring into transformed coefficients belonging to a larger integer ring, where the coefficients are randomized (i.e., masked) using a randomization integer and lifted using the lifting integer. The randomization integer may be randomly selected in another specific integer ring. The randomization is advantageously performed prior to the lifting operation.

After the transformation, the polynomial operation(s) is/are then executed on the transformed polynomial with the transformed coefficients, to obtain an intermediate result that may be a polynomial, referred and the intermediate result polynomial.

If the coefficient transformation involves randomization, the coefficients of this intermediate result polynomial are then unmasked by a reduction (i.e. by applying a modulo) in the smaller integer ring to be used in the cryptographic operation and provide a result of the cryptographic operation.

Thanks to the specific lifting operation applied to transform the polynomial coefficients, the intermediate result polynomial can be easily verified based on the lifting integer, after reduction of its coefficients in the specific integer ring of the lifting integer. Thus, a fault introduced in the polynomial operation(s) can be easily detected by the use of the representation of the coefficients of the intermediate result polynomial in this specific integer ring, since this representation corresponds to the lifting integer.

This method offers a robust solution to the vulnerabilities posed by quantum computing and the associated risks of implementation attacks such as fault and/or side-channel attacks, while maintaining efficiency suitable for resource-constrained devices.

The method can be carried out by a computing device 300.

This computing device 300 may be implemented with hardware and software. It may include:

- at least one processor 310,
- a memory or storage system 320, that may include one or more memories (e.g., Read Only Memory (ROM), Read Access Memory (RAM), volatile memory, non-volatile memory, etc.),
- a random number generator 330 for generating random numbers,
- a cryptographic module 340 for executing one or more cryptographic operations.

The operations, function, and/or actions that the computing device 300 is configured to carry out are described in more detail in the description of the method for executing a cryptographic operation according to any embodiment.

The present disclosure also concerns a computer program comprising instructions which, when the program is executed by a computer, or by the computing device 300, cause the computer or computing device to carry out the steps of the method for executing a cryptographic operation according to any embodiment.

In the present disclosure, the following abbreviations and notations are used:

- p is an integer,
- q is an integer, different from p,
- t is an integer, different from p and q,

- $\mathbb{Z}_p$ is the ring of integers modulo p (i.e., the integers {0, 1, 2, ..., p-1},

- $\mathbb{Z}_q$ is the ring of integers modulo q (i.e., the integers {0, 1, 2, ..., q-1},

- $\mathbb{Z}_t$ is the ring of integers modulo t (i.e., the integers {0, 1, 2, ..., t-1},

- $\mathbb{Z}_{pqt}$ is the ring of integers modulo p×q×t (i.e., the set of integers {0, 1, 2, ..., p×q×t -1},

- $\mathbb{Z}_q[x]$ is the notation for the ring of polynomials with coefficients in $\mathbb{Z}_q$. It consists of all polynomials whose coefficients are elements of $\mathbb{Z}_q$,

- $\mathbb{Z}_q[x]/(f)$ represents a ring of integer polynomials modulo f, where f represents a polynomial, that may be referred as a reduction polynomial. For example, $f = x^n + 1$, where $x$ is an indeterminate or variable used to construct polynomials and $n$ is an integer representing a polynomial degree. In another example, $f = x^n - 1$. The elements of $\mathbb{Z}_q[x]/(f)$ can be represented by integer polynomials of degree less than n with coefficients reduced modulo q. The polynomials in $\mathbb{Z}_q[x]/(f)$ are expressions of the general form $c_{q\_0} + c_{q\_1}x + c_{q\_2}x^2 + ... + c_{q\_n-1}x^{n-1}$, where $c_{q\_i}$ with $i = 0, ..., n - 1$ represent the polynomial coefficients in $\mathbb{Z}_q$,

- A is a polynomial in $\mathbb{Z}_q[x]/(f)$ of the form $A(x) = A_{q\_0} + A_{q\_1}x + A_{q\_2}x^2 + \cdots + A_{q_{n-1}}x^{n-1}$, where $A_{q-i}$ with $i = 0, ..., n - 1$ represent the polynomial coefficients in $\mathbb{Z}_q$,

- B is a polynomial in $\mathbb{Z}_q[x]/(f)$ of the form $B(x) = B_{q\_0} + B_{q\_1}x + B_{q-2}x^2 + ... + B_{qn-1}x^{n-1}$, where $B_{q\_i}$ with $i = 0, ..., n - 1$ represent the polynomial coefficients in $\mathbb{Z}_q$,

- $r_t$ is an integer from $\mathbb{Z}_t$ randomly selected,

- $r_p$ is an integer from $\mathbb{Z}_p$,

- NTT: Number Theoretic Transform.

In an embodiment, the integers p, q and t may satisfy the following properties:

- q is a prime number such that a primitive root of unity of order n, noted $\omega_q$, exists in $\mathbb{Z}_q$, in other words $(\omega_q)^n = 1 \ mod \ q$ and $(\omega_q)^m \not\equiv 1 \ mod \ q$ for all m<n,

- p is another prime number, different from q, such that a primitive root of unity of order n, noted $\omega_p$, exists in $\mathbb{Z}_p$, in other words $(\omega_p)^n \equiv 1 \ mod \ p$ and $(\omega_p)^m \not\equiv 1 \ mod \ p$ for all m<n,

- p, q and t are pairwise coprime (i.e., the integers of each pair of integers among p, q and t are coprime),

- t is an odd integer.

The integer t may be randomly selected in the integer space. Alternatively, it could be selected among a predetermined set of integers. For example, the integer t could alternatively take the different integers from this predetermined set, or it could be randomly selected in this predetermined set of integers. In another variant, the integer t could be fixed. Advantageously, the integer should not be too big to avoid slowing down the computation time. For example, $pqt < 2^{63}$ to maintain coefficients coded on 64 bits after application of the method, or $pqt < 2^{31}$ to maintain coefficients coded on 32 bits after application of the method. More generally, we may have $pqt < 2^{n-1}$ to maintain coefficients coded on n bits after application of the method. This allows to ease the implementation and have the lowest impact on performances.

Since p, q and t are pairwise coprime, the integer ring $\mathbb{Z}_{pqt}$ is isomorphic to $\mathbb{Z}_q \times \mathbb{Z}_p \times \mathbb{Z}_t$. An isomorphism

between two rings is a bijective (one-to-one and onto) mapping that preserves the ring operations of addition and multiplication. In other words, the ring operations of addition and multiplication are preserved between $\mathbb{Z}_{pqt}$ and $\mathbb{Z}_q$, between $\mathbb{Z}_{pqt}$ and $\mathbb{Z}_p$, between $\mathbb{Z}_{pqt}$ and $\mathbb{Z}_t$. Thus, executing a ring operation of addition or multiplication in $\mathbb{Z}_{pqt}$ is equivalent to executing the same operation in each of the rings $\mathbb{Z}_q$, $\mathbb{Z}_p$, and $\mathbb{Z}_t$.

First Embodiment

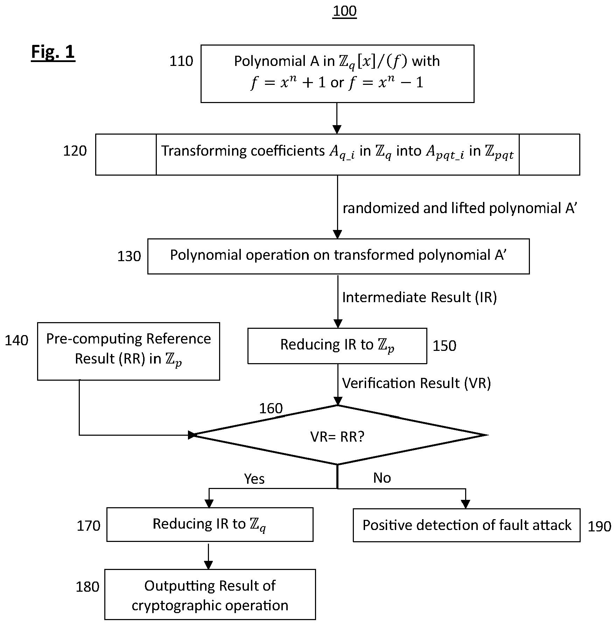

FIG. 1 shows a flowchart of a method 100 for executing a cryptographic operation including at least one polynomial operation with fault attack detection and side-channel protection, according to a first embodiment.

In this first embodiment, the cryptographic operation includes a polynomial operation performed on a polynomial A in $Z_q[x]/(f)$. For example, the reduction polynomial f is of the form $f = x^n + 1$. Alternatively, it could be of the form $f = x^n - 1$.

The method begins with providing the polynomial A at step 110.

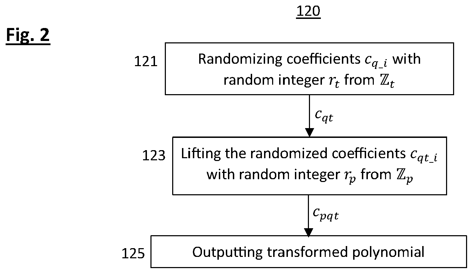

The coefficients of the polynomial A are transformed from the integer ring $\mathbb{Z}_q$ into the integer ring $\mathbb{Z}_{pqt}$ through a transformation process 120. The transformation may include a randomization and a lifting of the polynomial coefficients as described in more detail with reference to FIG. 2. The transformed polynomial is for executing the polynomial operation.

Each coefficient of a polynomial in the integer ring $\mathbb{Z}_q$ has several representations respectively in the rings $\mathbb{Z}_p$, $\mathbb{Z}_t$, and $\mathbb{Z}_{pqt}$ that each correspond to the representation in the ring $\mathbb{Z}_q$, due to the isomorphism between $\mathbb{Z}_{pqt}$ and $\mathbb{Z}_q \times \mathbb{Z}_p \times \mathbb{Z}_t$ as previously described.

The transformation of the polynomial coefficients in the process 120 may transform each coefficient of the polynomial A in the ring $\mathbb{Z}_q$ to a corresponding representation in the ring $\mathbb{Z}_{pqt}$.

FIG. 2 illustrates one embodiment of the transformation process 120 for transforming coefficients of a polynomial in $Z_q[x]/(f)$ to provide fault attack detection and side-channel attack protection. Let's consider that for example: $f = x^n + 1$ (alternatively it could be : $f = x^n - 1$). The coefficients of the polynomial to be transformed are noted $c_q$ and this polynomial to be transformed is of the general form: $c_{q\_0} + c_{q\_1}x + c_{q\_2}x^2 + \dots + c_{q\_n-1}x^{n-1}$. The transformation process 120 includes randomizing and thus masking coefficients $c_{q\_i}$ at step 121, lifting the randomized, masked coefficients $c_{qt\_i}$ at step 123, and outputting the transformed polynomial (i.e., randomized and lifted) with transformed coefficients $c_{pqt\_i}$ at step 125.

At step 121, the transformation process 120 begins by randomizing coefficients $c_{q\_i}$ with a randomization integer $r_t$ randomly selected from (or "in") the integer ring $\mathbb{Z}_t$. This step 121 ensures that the coefficients are masked, thereby protecting the polynomial against potential side-channel attacks that could exploit the values of the coefficients. For example, the step 121 of randomizing the coefficients $c_{q\_i}$ is carried out based on the expression:

$$c_{qt\_i} = c_{q\_i} + q \times r_t,$$

where

- $c_{q\_i}$ represents a coefficient of index i in $\mathbb{Z}_q$,

- $c_{qt\_i}$ represents the corresponding randomized coefficient of index i in $\mathbb{Z}_{qt}$,

- $r_t$ represents the randomization integer randomly selected in $\mathbb{Z}_t$,
- + is the addition operator,
- $\times$ is the multiplication operator.

In another example the step 121 of randomizing the coefficients $c_{q\_i}$ may be carried out based on the expression:

$$c_{qt\_i} = (q \times r_t + 1) \times c_{q\_i}.$$

The generation of the randomization integer $r_t$ for coefficient randomization can be performed based on a specific random number generation strategy. Examples of such strategy include:

- periodic generation, when a new random number $r_t$ is generated at regular intervals,
- event-driven generation, when a new random number $r_t$ is generated based on certain events, such as a new computation or iteration or polynomial operation (e.g., a new polynomial multiplication or addition), or changing the integer t, or selecting a new lifting integer $r_p$,
- coefficient-based generation, when a new random number $r_t$ is generated for each coefficient in a set of coefficients, or
- any combination of the periodic generation, event-driven generation and coefficient-based generation.

After generating a new randomization integer $r_t$ and/or after changing the integer t, the step 121 of randomizing the coefficients $c_q$ may be executed again to mask the polynomial coefficients based on this new randomization integer $r_t$. This allows to enhance protection against side-channel attacks.

Following the randomization 121, at step 123, the transformation process 120 continues by lifting the masked, randomized coefficients $c_{qt\_i}$ with a lifting integer $r_p$ from $\mathbb{Z}_p$. The lifting integer $r_p$ can be randomly selected in the integer ring $\mathbb{Z}_p$. On top of helping against side-channel attacks, randomizing the lifting integer $r_p$ prevent adversaries from being able to learn the values of the coefficients based on whether or not their fault was detected by the defense. Alternatively, the lifting integer $r_p$ could be randomly selected among a predefined set of integers. The bigger the subset of integers, the stronger the defense. This lifting step 123 moves the coefficients $c_{qt\_i}$ from their representation modulo qt to a representation modulo pqt in the ring $\mathbb{Z}_{pqt}$. In other words, the step 123 lifts the coefficients $c_{qt\_i}$ into the larger integer ring $\mathbb{Z}_{pqt}$. The lifting operation 123 uses the lifting integer $r_p$ and has the property that any coefficient once lifted and then reduced back modulo p (by applying a modulo p) is equal to this lifting integer $r_p$.

For example, the step 123 of lifting the coefficients $c_{qt\_i}$ is carried out by computing the lifted coefficients noted $c_{pqt}$ based on the expression:

$$c_{pqt\_i} = q \times (q^{-1} \bmod p) \times r_p + p \times (p^{-1} \bmod q) \times c_{qt\_i},$$

where

- $c_{pqt\_i}$ represents the lifted coefficient of index i (i.e., the coefficient, in $\mathbb{Z}_{pqt}$, of $x^i$ of the polynomial);
- $c_{qt\_i}$ represents the randomized coefficient in $\mathbb{Z}_{qt}$ ;
- $r_p$ represents the lifting integer from $\mathbb{Z}_p$ .

The generation of the random integer $r_p$ can be performed based on a specific random number generation strategy. Examples of such strategy have been previously given in relation to the random integer $r_t$.

At step 125, the process 120 outputs the transformed polynomial with transformed coefficients in $\mathbb{Z}_{pqt}$. The output polynomial is of the form:

$$c_{pqt\_0} + c_{pqt\_1}x + c_{pqt\_2}x^2 + \cdots + c_{pqt\_n-1}x^{n-1} .$$

This transformed polynomial is thus prepared for polynomial operation(s) with enhanced security measures against both fault and side-channel attacks.

In an embodiment, the computed coefficients $c_{qt\_i}$ and $c_{pqt\_i}$ have the following properties:

$$c_{qt\_i} \bmod q = c_{q\_i},$$

$$c_{qt\_i} \bmod pqt = c_{q\_i} + q \times r_t,$$

$$c_{pqt\_i} \bmod p = r_p,$$

and

$$c_{pqt\_i} \bmod q = c_{q\_i}.$$

In the first embodiment, this transformation process 120 for transforming polynomial coefficients is applied to the coefficients of the polynomial A. This polynomial A to be transformed is of the form $A(x) = A_{q\_0} + A_{q\_1}x + A_{q\_2}x^2 + \cdots + A_{q\_n-1}x^{n-1}$, where $A_{q-i}$ with $i = 0, ..., n-1$ represent the polynomial coefficients in $\mathbb{Z}_q$. The polynomial coefficients $A_{q-i}$ of A in $\mathbb{Z}_q$ are transformed into a corresponding representation in $\mathbb{Z}_{pqt}$ (i.e., into the polynomial coefficients $A_{pqt\_i}$ in $\mathbb{Z}_{pqt}$). The transformed polynomial with the coefficients $A_{pqt\_i}$ in $\mathbb{Z}_{pqt}$ is noted A'.

The polynomial operation is then performed on the transformed polynomial A' at step 130, producing an intermediate result. This intermediate result may be polynomial, that will be referred as the intermediate result polynomial. This intermediate result is verifiable based on the lifting integer $r_p$ for fault attack detection. In other words, the intermediate result can be verified based on the lifting integer $r_p$ to determine whether or not an error or fault has been introduced in the polynomial operation, as will be described in more detail below.

The method 100 may include a verification process for verifying the intermediate result and thus detecting if a fault or error has been introduced in the cryptographic operation, more specifically in the polynomial operation(s). This verification process may include a process 140 of pre-computing a reference result, a step 150 of generating a verification result, and a test step 160 of verifying if both results (reference result and verification result) match.

In the process 140, the reference result is computed, or pre-computed, based on the lifting integer. This reference result may be a polynomial. It can be pre-computed (i.e., computed in advance) and stored. The process 140 for computing the reference result includes performing the polynomial operation (i.e., the same polynomial operation as the one performed in step 130) but with polynomial coefficients of the polynomial, here A (or A'), all equal to the lifting integer $r_p$. As previously indicated, the polynomial coefficients in $\mathbb{Z}_{pqt}$ once reduced modulo p are all equal to the lifting integer $r_p$. In the process 140, the same polynomial operation is performed on a predetermined or known polynomial R(x) in $\mathbb{Z}_p[x]/(f)$ with all coefficients equal to the integer $r_p$. This predetermined polynomial is of the form:

$$R(x) = r_p + r_p x + r_p x^2 + \cdots + r_p x^{n-1}.$$

The reference result is the result of the same polynomial operation as the one performed in step 130, but performed on this predetermined polynomial R(x) with all coefficients equal to $r_p$.

In the step 150, the verification result may be generated from the intermediate result produced at step 130 by applying a modulo p (i.e., in $\mathbb{Z}_p$). This verification result may be a polynomial. In an embodiment, the coefficients of the intermediate result from step 130 are reduced by applying a modulo p to obtain the verification result polynomial at step 150.

Then, the verification process includes the step 160 of determining if both results, including the reference result and the verification result, match with one another. This can be performed for example by comparing both the reference result and the verification result, for example by a one-to-one comparison of the respective coefficients of same index of the reference result polynomial and of the verification result polynomial. Alternatively, the test step 160 may include a step of performing an arithmetic (e.g., subtraction) or Boolean operation (e.g., XOR), summing all the resulting coefficients and comparing the result to 0.

If the verification result does not match the reference result, a fault or error introduced in the cryptographic operation is positively detected at step 190. In that case, an alert for a fault attack may be outputted. Any preventive measure can be applied, such as halting the cryptographic operation, erasing the memories, logging the event for further analysis, or triggering a system reset to prevent further exploitation. These measures help ensure the integrity and security of the cryptographic operation. In that case, the method 100 can be interrupted.

If the verification result matches the reference result, no fault or error in the cryptographic operation is detected at least at this stage. In that case, the method 100 proceeds with unmasking the intermediate result by reducing its coefficients back to $\mathbb{Z}_q$ in step 170. In an embodiment, the intermediate result is a polynomial and, in the step 170, the polynomial coefficients of the intermediate result polynomial are unmasked by applying a modulo q to the polynomial coefficients to produce a final result polynomial with coefficients in $\mathbb{Z}_q$ This final result polynomial may be used in the cryptographic operation to provide a result of the cryptographic operation at step 180. It represents the successful completion of the polynomial operation, that is part of the cryptographic operation, with fault attack detection and side-channel protection.

As previously described, the intermediate result may be unmasked only if the intermediate result is successfully verified. This allows for improved security and protection, ensuring that any potential faults or errors are identified and addressed before the final result is produced, and that the coefficients of the polynomial resulting from the polynomial operation 130 are unmasked only if no fault attack is detected.

Second Embodiment

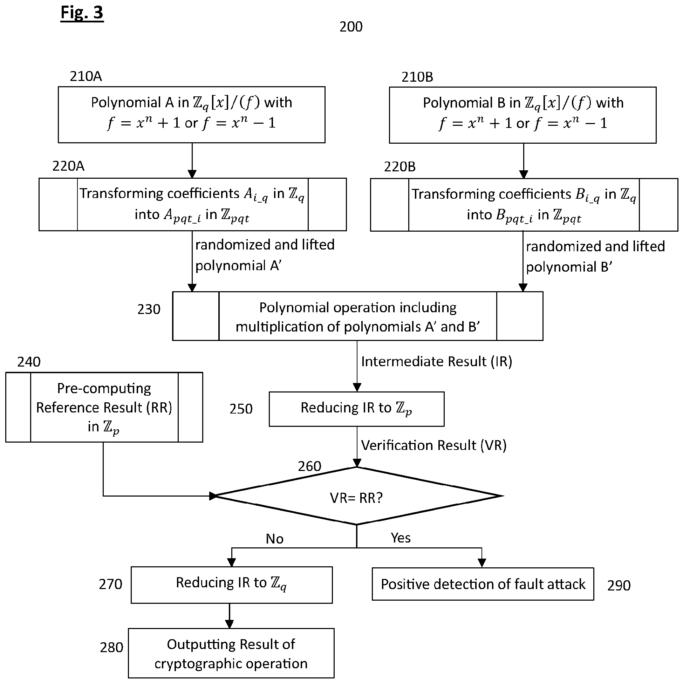

A second embodiment will now be described with reference to figures 3-5. This second embodiment is based on the first embodiment and only differs from it by steps and/or features described below.

In this second embodiment, the method 200 is for executing a cryptographic operation including at least one polynomial operation on two polynomials A and B with fault attack detection and side-channel protection. This polynomial operation may include a multiplication of the two polynomials.

FIG. 3 illustrates the method 200 according to the second embodiment. The method 200 includes steps for executing a cryptographic operation that involves a polynomial multiplication of two input polynomials A and B, which are respectively transformed into A' and B' for the polynomial multiplication.

The method 200 comprises a step 210A of providing the polynomial A 210A and a step 210B of providing the polynomial B. Each of the input polynomials A, B are in $Z_q[x]/(f)$, where the reduction polynomial f is for example of the form $f = x^n + 1$. Alternatively, the reduction polynomial may be of the form $f = x^n - 1$ for example.

The polynomials A and B are then transformed at steps 220A and 220B respectively. This transformation involves randomizing and lifting the coefficients of polynomials A and B from the integer ring $\mathbb{Z}_q$ into a larger integer ring $\mathbb{Z}_{pqt}$, resulting in the transformed polynomials A' and B', as described in the first embodiment. The randomization of the polynomial coefficients of A and the randomization of the polynomial coefficients of B may be carried out with two specific randomization integers $r_{A\_t}$ and $r_{B\_t}$ respectively. These randomization integers $r_{A\_t}$ and $r_{B\_t}$ may be different from one another. However, $r_{A\_t}$ and $r_{B\_t}$ could be the same. The lifting of the polynomial coefficients of A and the lifting of the polynomial coefficients of B may be carried out with two specific lifting integers $r_{A\_p}$ and $r_{B\_p}$ respectively. These lifting integers $r_{A\_p}$ and $r_{B\_p}$ may be different from one another. However, $r_{A\_p}$ and $r_{B\_p}$ could be the same.

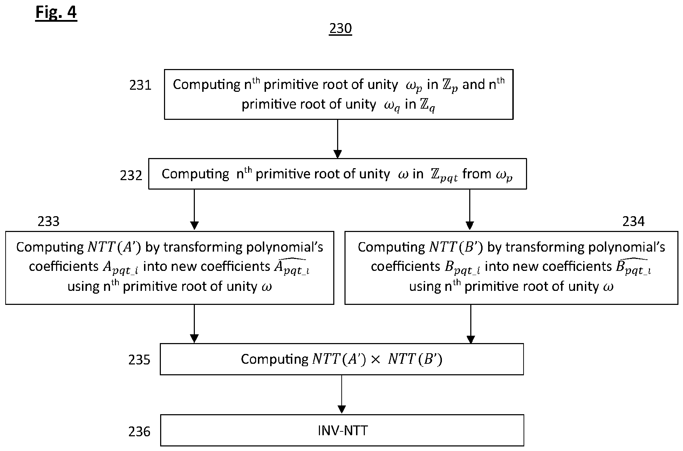

The transformed polynomials A' and B' are then subjected to a polynomial operation at step 230, which includes the multiplication of the two polynomials A' and B' to produce an intermediate result polynomial. The polynomial multiplication is performed modulo f, with $f = x^n + 1$ for example. Therefore, the intermediate result polynomial is part of a ring of integer polynomials modulo f, with $f = x^n + 1$ for example. The transformed polynomial and the intermediate result polynomial are in the same ring. The step 230 according to the second embodiment will be described later in more detail with reference to FIG. 4.

The method 200 also includes a verification process for verifying the intermediate result and thus detecting if a fault or error has been introduced in the cryptographic operation, more specifically in the polynomial operation(s). This verification process may include a process 240 for computing a reference result polynomial, a step 250 of generating a verification result polynomial, and a step 260 of verifying the verification result polynomial based on the reference result polynomial.

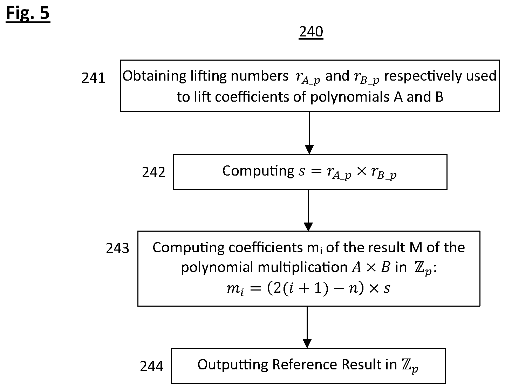

The process 240 for computing the reference result polynomial with coefficients in the integer ring $\mathbb{Z}_p$, based on the lifting integers $r_{A\_p}$ and $r_{B\_p}$, according to the second embodiment is illustrated in FIG. 5.

FIG. 5 illustrates the process 240 for computing a reference result (e.g., a polynomial) in the integer ring $\mathbb{Z}_p$, which is used in the detection of fault(s) during a cryptographic operation involving polynomial multiplication, that can be used in the second embodiment. The process 240 includes obtaining lifting numbers, computing a specific value based on these numbers, calculating coefficients of a result polynomial, and outputting the reference result.

At step 241, the step 240 provides lifting integers $r_{A\_p}$ and $r_{B\_p}$, which are used to lift coefficients of polynomials A and B respectively. These lifting numbers $r_{A\_p}$ and $r_{B\_p}$ are similar to the lifting integer $r_p$ of the first embodiment but are specific to the polynomial A and to the polynomial B respectively. These lifting integers $r_{A\_p}$ and $r_{B\_p}$ are selected from the integer ring $\mathbb{Z}_p$, for example randomly selected, and serve as lifting integers for the respective polynomials A, B.

At step 242, the step 240 computes a constant s by multiplying the lifting integers $r_{A\_p}$ and $r_{B\_p}$ together. The value s represents the product of the lifting integers $r_{A\_p}$ and $r_{B\_p}$ - i.e., $s = r_{A\_p} \times r_{B\_p}$ - and is used in subsequent calculations to generate the reference result.

At step 243, the process 240 computes coefficients $m_i$ of the result M of the polynomial multiplication A × B with coefficients in the integer ring $\mathbb{Z}_p$. Each coefficient $m_i$ is calculated using the formula:

$$m_i = (2(i+1) - n) \times s,$$

where

- $i$ is the coefficient index (i.e., the coefficient of $x^i$) in the polynomial M;
- n is the degree of the reduction polynomial $f = x^n + 1$ or $f = x^n - 1$, and
- s is the constant computed in step 242 ($s = r_{A\_p} \times r_{B\_p}$).

At step 244, the process 240 outputs the reference result that is a polynomial with coefficients in the integer ring $\mathbb{Z}_p$.

At step 250, the coefficients of the intermediate result polynomial are reduced to $\mathbb{Z}_p$ by applying a modulo p to obtain the verification result polynomial.

At step 260, it is verified if the verification result polynomial matches the reference result polynomial produced by the process 240, for example based on a one-to-one comparison of the respective coefficients of same index of the reference result polynomial and of the verification result polynomial. Alternatively, the verification at step 260 could be performed by executing an arithmetic (e.g., subtraction) or Boolean operation (e.g., XOR), summing all the resulting coefficients and comparing the result to 0. Thus, the reference result polynomial is used to verify the integrity of the polynomial operation by comparing the reference result polynomial with the verification result polynomial obtained from the actual polynomial operation performed at step 250.

If the verification result does not match the reference result, this indicates a potential fault attack and the method 200 proceeds to step 290 of positively detecting a fault attack. As previously described, any appropriate countermeasure may be applied, like interrupting the method 200.

If the verification result matches the reference result, indicating no fault attack at this stage, the method 200 goes to step 270 of unmasking the intermediate result. At step 270, where the coefficients of the intermediate result polynomials are unmasked by reducing them (i.e., the polynomial coefficients) back to the integer ring $\mathbb{Z}_q$ (i.e., by applying a modulo q) to produce a final result of the polynomial operation(s) 230 (i.e., a final polynomial). This result polynomial in $\mathbb{Z}_q[x]/(f)$ that is the product of polynomials A and B in $\mathbb{Z}_q[x]/(f)$ may be used in the cryptographic operation to provide a result of the cryptographic operation at step 280. It represents the successful completion of the polynomial operation, that is part of the cryptographic operation, with fault attack detection and side-channel protection.

FIG. 4 illustrates one embodiment of a process 230 for executing a polynomial multiplication using Number Theoretic Transform (NTT), according to an embodiment.

As well known by the person skilled in the art, NTT can be used to compute the multiplication of two polynomials more efficiently. Indeed, applying NTT to the coefficients of the polynomials converts the polynomial multiplication operation into a pointwise multiplication operation. Once in the NTT domain, the corresponding coefficients of the transformed polynomials can be directly multiplied. This operation is much simpler and faster than polynomial multiplication in the coefficient domain. After performing the pointwise multiplication, applying the inverse NTT to the result converts it back to the coefficient domain, giving the coefficients of the product polynomial. Thus, the use of NTT reduces the complexity of polynomial multiplication.

Alternatively, fast NTT could be used.

NTT uses roots of unity, specifically primitive roots of unity modulo a prime number, to perform the transformation. These roots enable the conversion between the polynomial coefficients and pointwise representations of polynomials.

A $n^{th}$ root of unity modulo a prime number, for example p, is a number $\omega$ such that:

$$\omega^n = 1 \ mod \ p.$$

A nth primitive root of unity modulo a prime number, for example p, is a specific nth root of unity $\omega$ such that:

$$\omega^n = 1 \ mod \ p,$$

and

$$\omega^m \neq 1 \ \text{for any} \ 0 < m < n.$$

In the second embodiment, the process 230 for multiplying polynomials A, B may comprise steps 231 to 236, which are executed to perform the polynomial multiplication operation with fault attack detection and side-channel protection.

At step 231, the process 230 computes a nth primitive root of unity $\omega_p$ modulo p (i.e., in $\mathbb{Z}_p$ ) and a nth primitive root of unity $\omega_q$ modulo q (i.e., in $\mathbb{Z}_q$ ).

Following step 231, at step 232, the process 230 computes a nth primitive root of unity $\omega_{pqt}$ modulo pq (i.e., in $\mathbb{Z}_{pq}$ ) from the nth primitive roots of unity $\omega_p$ and $\omega_q$ computed at step 231. For the sake of simplicity, this nth primitive root of unity $\omega_{pq}$ modulo pq will be noted $\omega$. For example, the root of unity $\omega$ in the integer ring $\mathbb{Z}_{pq}$ is computed based on the expression $\omega =$

$$q \times (q^{-1} \text{mod} \ p) \times \omega_p + p \times (p^{-1} \text{mod} \ q) \times \omega_q,$$

where

- $\omega_p$ is a nth primitive root of unity in the integer ring $\mathbb{Z}_p$ ;

- $\omega_q$ is a nth primitive root of unity in the integer ring $\mathbb{Z}_q$ ;

- $\omega$ is a nth primitive root of unity in the integer ring $\mathbb{Z}_{pq}$ .

This step 232 establishes a nth primitive root of unity $\omega$ in $\mathbb{Z}_{pq}$ for the subsequent operations (including Number Theoretic Transform (NTT) operations) performed in $\mathbb{Z}_{pqt}$ .

The NTT can be seen as a series of multiplications, additions and/or subtractions. Performing the NTT in $\mathbb{Z}_{pqt}$ means doing those operations modulo pqt. Using the roots of unity of $\mathbb{Z}_{pq}$ and doing the NTT in $\mathbb{Z}_{pqt}$ means that the series of operations will use the constant $\omega$ of $\mathbb{Z}_{pq}$ but the result is reduced modulo pqt.

At step 233, the process 230 computes the NTT of the transformed polynomial A', noted NTT(A'), by transforming the polynomial A's coefficients $A_{pqt\_i}$ into new coefficients $\widehat{A_{pqt\_i}}$ using the nth primitive root of unity $\omega$. This transformation prepares the transformed polynomial A' for multiplication in the NTT domain.

At step 234, the process 230 computes the NTT of the transformed polynomial B', noted NTT(B'), by transforming polynomial B's coefficients $B_{pqt\_i}$ into new coefficients $\widehat{B_{pqt\_i}}$ using the nth root of unity $\omega$. This step is analogous to step 233 and prepares the transformed polynomial B' for multiplication in the NTT domain.

The NTT (or fast NTT) relies on scalar additions and multiplications between coefficients, roots of unity and constants. Consequently, performing an NTT in the integer ring in $\mathbb{Z}_{pqt}$ with the primitive root of unity $\omega$ is equivalent to

performing an NTT in $\mathbb{Z}_q$ and an NTT in $\mathbb{Z}_p$ (the same goes for the inverse NTT).

The steps 233 and 234 can be performed simultaneously or successively.

At step 235, the process 230 computes the product of NTT(A') and NTT(B') (i.e., $NTT(A') \times NTT(B')$) to obtain the result of the polynomial multiplication between the transformed polynomials A' and B' in the NTT domain. This step 235 produces an intermediate result in the NTT domain that reflects the multiplication of the original polynomials.

At step 236, the process 230 performs the inverse Number Theoretic Transform (INV-NTT) on the result obtained in step 235. This step 236 converts the intermediate result back from the NTT domain to the coefficient domain, producing an intermediate result (e.g., a polynomial) of the polynomial multiplication operation between the transformed polynomials A' and B'.

As previously described, the step 236 is followed by the steps 250 and 260.

Third Embodiment

A third embodiment is based on the first or second embodiment and only differs from it by steps and/or features described below.

In this third embodiment, the method and computing device for executing a cryptographic operation or algorithm that includes one or more polynomial operations, which may be part of lattice-based cryptography, may only provide protection against fault attack.

The method according to the third embodiment mainly differs from the method 100 (first embodiment), or 200 (second embodiment), in that the step of transforming the polynomial coefficients of a polynomial includes a step of lifting the coefficients with a lifting integer without pre-randomization of these polynomial coefficients.

The method according to the third embodiment may be used in case that protection against side-channel attacks is not desired, and only protection against fault attack is desired.

] The operations of method according to any of the disclosed embodiments presented below are intended to be illustrative. The method may include one or more operations, functions, or actions, as illustrated by one or more of blocks and arrows. Although the blocks may be illustrated in a sequential order, these blocks may in some instances be performed in parallel, and/or in a different order than those described herein. Also, the various blocks may be combined into fewer blocks, divided into additional blocks, and/or removed based upon the desired implementation.

In addition, for the method and other processes disclosed herein, the flowchart shows functionality and operation of one possible implementation of present embodiments. In this regard, each block may represent a module, a segment, a portion of a manufacturing or operation process, or a portion of program code, which includes one or more instructions executable by a processor for implementing specific logical functions or steps in the process. The program code may be stored on any type of computer readable medium, for example, such as a storage device including a disk or hard drive. The computer readable medium may include non-transitory computer readable medium, for example, such as computer-readable media that stores data for short periods of time like register memory, processor cache and Random Access Memory (RAM). The computer readable medium may also include non-transitory media, such as secondary or persistent long-term storage, like read only memory (ROM), optical or magnetic disks, compact-disc read only memory (CD-ROM), for example. The computer readable media may also be any other volatile or non-volatile storage systems. The computer readable medium may be considered a computer readable storage medium, for example, or a tangible storage device.

In addition, for the method and other processes disclosed herein, each block may represent circuitry that is wired to perform the specific logical functions in the process, for example.

FINAL CONSIDERATIONS

Although an overview of the inventive subject matter has been described with reference to specific example embodiments, various modifications and changes may be made to these embodiments without departing from the broader spirit and scope of embodiments of the present invention. For example, various embodiments of features thereof may be mixed and matched or made optional by a person of ordinary skill in the art. Therefore, the Detailed Description is not to be taken in a limiting sense, and the scope of various embodiments is defined only by the appended claims, along with the full range of equivalents to which such claims are entitled.

**Claims**

1. A method for executing, in a computing device (300), a cryptographic operation including at least one polynomial operation (130; 230) on at least one polynomial (A, B) with coefficients belonging to an integer ring ( $\mathbb{Z}_q$ ) that

represents the integers modulo q, q being an integer, said method comprising:

A) transforming (120; 220) the polynomial coefficients from said integer ring ( $\mathbb{Z}_q$ ) to obtain transformed coefficients belonging to a larger integer ring ( $\mathbb{Z}_{pqt}$ ), at least by lifting (123) the polynomial coefficients with a lifting interger ($r_p$;$r_{A\_p}$,$r_{B\_p}$) from another integer ring ( $\mathbb{Z}_p$ ) that represents the integers modulo p, p being an integer, so that the transformed coefficients modulo p are equal to said lifting integer ($r_p$; $r_{A\_p}$, $r_{B\_p}$);

B) performing (130; 230) the at least one polynomial operation with the transformed coefficients to obtain an intermediate result that is verifiable based on said lifting integer ($r_p$; $r_{A\_p}$, $r_{B\_p}$); and

C) reducing (170; 270) coefficients of said intermediate result modulo q to provide a result of the cryptographic operation.

2. The method according to claim 1, wherein the step A) further includes a step of randomizing (121) said polynomial coefficients with a randomization integer ($r_t$) randomly selected from another integer ring ( $\mathbb{Z}_t$ ) that represents the integers modulo t, t being an integer.

3. The method according to claim 2, wherein the step of randomizing the polynomial coefficients is performed prior to lifting the polynomial coefficients.

4. The method according to any of claims 1 to 3, wherein the integers p, q and t are pairwise coprime.

5. The method according to any of claims 1 to 4, wherein the integer t is odd.

6. The method according to any of claims 1 to 5, wherein the lifting integer ($r_p$; $r_{A\_p}$, $r_{B\_p}$) is randomly selected.

7. The method according to any of claims 1 to 6, wherein the integer t is randomly selected.

8. The method according to any of claims 1 to 5, wherein the integer p is a prime number different from q such that a $n^{th}$ primitive root of unity exists in the integer ring of integers modulo p ( $\mathbb{Z}_p$ ).

9. The method according to any of claim 1 to 8, further comprising a verification process, including:

- reducing (150; 250) modulo p the coefficients of the intermediate result to obtain a verification result;
- verifying (160; 260) if the verification result matches a reference result based on the lifting integer and, in a negative event, detecting (190; 290) a fault.

10. The method according to claim 9, wherein the step C) is performed only if the verification result matches the reference result.

11. The method according to claim 9 or 10, wherein the cryptographic operation including a polynomial multiplication between two polynomials (A, B), the verification process comprises pre-computing coefficients of the reference result by computing (242) a constant (s) that is the product of the lifting integer ($r_{A\_p}$) used to lift the coefficients of one of the two polynomial (A) and the lifting integer ($r_{B\_p}$) used to lift the coefficients of the other one of the two polynomials (B) and computing (243) each coefficient of the reference result based on said constant.

12. The method according to claim 11, wherein each coefficient of the reference result is computed based on the formula

$$m_i = (2(i+1) - n) \times s,$$

where

- $i$ represents a coefficient index,
- $n$ represents the degree of a reduction polynomial, and

- $s$ represents the computed constant.

13. The method according to any of claims 2 to 12, wherein the step (121) of randomizing the coefficients is carried out based on the expression $c_{qt} =$

$$c_q + q \times r_t,$$

where

- $c_q$ represents a coefficient in $\mathbb{Z}_q$ ;

- $c_{qt}$ represents the randomized coefficient in $\mathbb{Z}_{qt}$ ;

- $r_t$ represents the first random integer from $\mathbb{Z}_t$ .

14. The method according to any of claims 2 to 13, wherein the step (123) of lifting the randomized coefficients is carried out by computing the lifted coefficients based on the expression $c_{pqt} = q \times (q^{-1} \bmod p) \times r_p +$

$$p \times (p^{-1} \bmod q) \times c_{qt},$$

where

- $c_{pqt}$ represents the lifted coefficient in $\mathbb{Z}_{pqt}$ ;

- $c_{qt}$ represents the randomized coefficient in $\mathbb{Z}_{qt}$ ;

- $r_p$ represents the lifting integer from $\mathbb{Z}_p$ .

15. The method according to any of claims 2 to 14, wherein the step (121) of randomizing the coefficients is repeated after changing the integer t or after randomly selecting a new randomization integer from the integer ring $\mathbb{Z}_t$ .

16. The method according to any of claims 1 to 15, wherein, the cryptographic operation including a polynomial multiplication and application of Number Theoretic Transform, or NTT, to polynomials, the method comprises a step of computing an $n^{th}$ primitive root of unity from an $n^{th}$ primitive root of unity in the integer ring ( $\mathbb{Z}_p$ ) of integers modulo p and an $n^{th}$ primitive root of unity in the integer ring ( $(\mathbb{Z}_q)$ ) of integers module q.

17. The method according to claim 16, wherein, said $n^{th}$ primitive root of unity is computed based on the expression $\omega = q \times (q^{-1} \bmod p) \times \omega_p +$

$$p \times (p^{-1} \bmod q) \times \omega_q,$$

where

- $\omega_p$ is the $n^{th}$ primitive root of unity in the integer ring $\mathbb{Z}_p$ ;

- $\omega_q$ is the $n^{th}$ primitive root of unity in the integer ring $\mathbb{Z}_q$ ;
- $\omega$ is the computed $n^{th}$ primitive root of unity.

18. The method according to any of claims 1 to 17, wherein the at least one polynomial is from a quotient ring $\mathbb{Z}_q[x]/(f)$ , wherein

- $\mathbb{Z}_q[x]$ represents a ring of polynomials with coefficients in the integer ring $\mathbb{Z}_q$ that represent the integers modulo q,

- f represents a reduction polynomial, and

- any polynomial of said quotient ring $\mathbb{Z}_q[x]/(f)$ is considered modulo said reduction polynomial *f*.

19. The method according to claim 18, wherein the reduction polynomial is of the form $x^n + 1$ or $x^n - 1$.

20. A computing device (300) configured to perform the steps of any one of the claims 1 to 19.

21. A computer program comprising instructions which, when the program is executed by a computer, cause the computer to carry out the steps of the method of any one of the claims 1 to 19.

22. A computer-readable medium comprising instructions which, when executed by a computer, cause the computer to carry out the steps of the method of any one of claims 1 to 19.

**Fig. 1**

100

110 — Polynomial A in $\mathbb{Z}_q[x]/(f)$ with $f = x^n + 1$ or $f = x^n - 1$

120 — Transforming coefficients $A_{q\_i}$ in $\mathbb{Z}_q$ into $A_{pqt\_i}$ in $\mathbb{Z}_{pqt}$

randomized and lifted polynomial A'

130 — Polynomial operation on transformed polynomial A'

Intermediate Result (IR)

140 — Pre-computing Reference Result (RR) in $\mathbb{Z}_p$

150 — Reducing IR to $\mathbb{Z}_p$

Verification Result (VR)

160 — VR= RR?

Yes — No

170 — Reducing IR to $\mathbb{Z}_q$

190 — Positive detection of fault attack

180 — Outputting Result of cryptographic operation

**Fig. 2**

$\underline{120}$

121 | Randomizing coefficients $c_{q\_i}$ with random integer $r_t$ from $\mathbb{Z}_t$

$c_{qt}$

123 | Lifting the randomized coefficients $c_{qt\_i}$ with random integer $r_p$ from $\mathbb{Z}_p$

$c_{pqt}$

125 | Outputting transformed polynomial

**Fig. 3**

200

210A
Polynomial A in $\mathbb{Z}_q[x]/(f)$ with
$f = x^n + 1$ or $f = x^n - 1$

210B
Polynomial B in $\mathbb{Z}_q[x]/(f)$ with
$f = x^n + 1$ or $f = x^n - 1$

220A
Transforming coefficients $A_{i\_q}$ in $\mathbb{Z}_q$
into $A_{pqt\_i}$ in $\mathbb{Z}_{pqt}$

220B
Transforming coefficients $B_{i\_q}$ in $\mathbb{Z}_q$
into $B_{pqt\_i}$ in $\mathbb{Z}_{pqt}$

randomized and lifted
polynomial A'

randomized and lifted
polynomial B'

230
Polynomial operation including
multiplication of polynomials A' and B'

Intermediate Result (IR)

240
Pre-computing
Reference Result (RR)
in $\mathbb{Z}_p$

250
Reducing IR to $\mathbb{Z}_p$

Verification Result (VR)

260
VR= RR?

No

Yes

270
Reducing IR to $\mathbb{Z}_q$

290
Positive detection of fault attack

280
Outputting Result of
cryptographic operation

**Fig. 4**

230

231 — Computing $n^{th}$ primitive root of unity $\omega_p$ in $\mathbb{Z}_p$ and $n^{th}$ primitive root of unity $\omega_q$ in $\mathbb{Z}_q$

232 — Computing $n^{th}$ primitive root of unity $\omega$ in $\mathbb{Z}_{pqt}$ from $\omega_p$

233 — Computing $NTT(A')$ by transforming polynomial's coefficients $A_{pqt\_i}$ into new coefficients $\widehat{A_{pqt\_i}}$ using $n^{th}$ primitive root of unity $\omega$

234 — Computing $NTT(B')$ by transforming polynomial's coefficients $B_{pqt\_i}$ into new coefficients $\widehat{B_{pqt\_i}}$ using $n^{th}$ primitive root of unity $\omega$

235 — Computing $NTT(A') \times NTT(B')$

236 — INV-NTT

**Fig. 5**

<u>240</u>

241 | Obtaining lifting numbers $r_{A\_p}$ and $r_{B\_p}$ respectively used to lift coefficients of polynomials A and B

242 | Computing $s = r_{A\_p} \times r_{B\_p}$

243 | Computing coefficients $m_i$ of the result M of the polynomial multiplication $A \times B$ in $\mathbb{Z}_p$:
$$m_i = (2(i+1) - n) \times s$$

244 | Outputting Reference Result in $\mathbb{Z}_p$

**Fig. 6**

300

| CPU 310 | ⟷ | | ⟷ | Random Number Generator 330 |
| Storage system 320 | ⟷ | ⇕ | | |
| I/O interface 350 | ⟷ | | ⟷ | Cryptographic Module 340 |

**Europäisches Patentamt**
**European Patent Office**
**Office européen des brevets**

# EUROPEAN SEARCH REPORT

**Application Number**

EP 24 18 8169

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DANIEL HEINZ ET AL: "Combined Fault and DPA Protection for Lattice-Based Cryptography", IACR, INTERNATIONAL ASSOCIATION FOR CRYPTOLOGIC RESEARCH , vol. 20210129:102013 29 January 2021 (2021-01-29), pages 1-30, XP061051908, Retrieved from the Internet: URL:https://eprint.iacr.org/2021/101.pdf [retrieved on 2021-01-29] | 1-10, 13-22 | INV. H04L9/00 H04L9/30 |
| A | * page 11 - page 16 * ----- | 11,12 | |
| A | US 2019/044720 A1 (POEPPELMANN THOMAS [DE]) 7 February 2019 (2019-02-07) * paragraph [0038] - paragraph [0136] * ----- | 1-22 | |
| A | EP 4 199 410 A1 (THALES DIS FRANCE SAS [FR]) 21 June 2023 (2023-06-21) * paragraph [0007] - paragraph [0020] * ----- | 1-22 | |

**TECHNICAL FIELDS SEARCHED (IPC)**

H04L

The present search report has been drawn up for all claims

| Place of search | Date of completion of the search | Examiner |
|---|---|---|
| Munich | 12 December 2024 | Apostolescu, Radu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 8169

This annex lists the patent family members relating to the patent documents cited in the above-mentioned European search report.
The members are as contained in the European Patent Office EDP file on
The European Patent Office is in no way liable for these particulars which are merely given for the purpose of information.

12-12-2024

| Patent document cited in search report | | Publication date | Patent family member(s) | | Publication date |
|---|---|---|---|---|---|
| US 2019044720 | A1 | 07-02-2019 | CN | 109388955 A | 26-02-2019 |
| | | | DE | 102017117907 A1 | 07-02-2019 |
| | | | US | 2019044720 A1 | 07-02-2019 |
| EP 4199410 | A1 | 21-06-2023 | EP | 4199410 A1 | 21-06-2023 |
| | | | EP | 4449663 A1 | 23-10-2024 |
| | | | WO | 2023111218 A1 | 22-06-2023 |

EPO FORM P0459

For more details about this annex : see Official Journal of the European Patent Office, No. 12/82